(19) **Europäisches Patentamt / European Patent Office / Office européen des brevets**

(11) **EP 2 109 079 A1**

(12) **DEMANDE DE BREVET EUROPEEN**

(43) Date de publication:
**14.10.2009 Bulletin 2009/42**

(51) Int Cl.:
***G06T 5/00*** *(2006.01)*

(21) Numéro de dépôt: **09155411.3**

(22) Date de dépôt: **17.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **09.04.2008 FR 0852390**

(71) Demandeur: **Peugeot Citroën Automobiles Société Anonyme
78170 Velizy Villacoublay (FR)**

(72) Inventeurs:
• **Bertret, Yannick Pierre
78250, HARDRICOURT (FR)**

• **Barber, Ramon
28020, MADRID (ES)**
• **Salichs, Miguel Angel
28015, MADRID (ES)**
• **Pequeno, José Manuel
28022, MADRID (ES)**
• **Nalewajk, Vincent
92500, RUEIL MALMAISON (FR)**

(74) Mandataire: **Allain, Laurent
Peugeot Citroën Automobiles SA
Propriété Industrielle (LG081)
18, rue des Fauvelles
92250 La Garenne Colombes (FR)**

(54) **Procédé et système de caractérisation d'un défaut de surface d'une pièce**

(57)   Ce procédé de caractérisation d'un défaut (23) de surface sur une pièce, du type comprenant l'étape préliminaire consistant à :
- capturer une image d'une zone à analyser de la pièce, l'image comportant une pluralité de pixels, chaque pixel étant repéré dans l'image par des coordonnées ;

est caractérisé en ce qu'il comprend les étapes consistant à :

- définir une succession de points de mesure (25, 26) suivant la longueur du défaut (23), chaque point de mesure suivant étant défini à partir d'un point de mesure précédent en fonction d'un critère prédéterminé et enregistrer des paramètres géométriques du défaut (23) pour chaque point de mesure (25,26),
- déduire une caractérisation du défaut (23) de ladite pièce à partir de l'ensemble des paramètres géométriques enregistrés aux différents points de mesure (25, 26).

FIG.6

**Description**

La présente invention concerne un procédé de caractérisation d'un défaut de surface sur une pièce, du type comprenant l'étape préliminaire consistant à :

- capturer une image d'une zone à analyser de la pièce, l'image comportant une pluralité de pixels, chaque pixel étant repéré dans l'image par des coordonnées (X, Y).

L'invention concerne également un produit de programme informatique.

L'invention concerne également une installation de caractérisation d'un défaut de surface sur une pièce, du type comprenant des moyens de capture d'une image d'une zone à analyser de la pièce, l'image comportant une pluralité de pixels, chaque pixel étant repéré dans l'image par des coordonnées (X, Y).

L'invention s'applique principalement à des pièces embouties de véhicules automobiles pour déceler les défauts d'emboutissage.

Il est connu dans l'état de la technique principalement deux familles de procédés de caractérisation de défauts de surface.

La première famille regroupe les procédés qui consistent à projeter des franges parallèles ou des modèles réguliers sur la surface à caractériser, puis à mesurer la déformation des franges ou des modèles projetés sur la surface.

L'article de Zhao Yu-Ming, Zhang Guo-Zhong et Yu Zhe-Feng, publié dans le journal de l'Université North Eastern (Natural Sense) en juillet 2005 (Volume 26, n°7, pp. 680-2) et intitulé « Point cloud fitting of NURBS curved surface in reverse design of automobiles » décrit un système ATOS et un procédé de caractérisation de défauts associé, basé sur la stéréovision. Le procédé projette des franges de différentes largeurs sur la surface à observer et les franges sont ensuite mesurées par deux caméras CCD. Le procédé reconstruit ensuite la forme de la surface observée en trois dimensions. Toutefois, la précision de ce procédé est faible, de l'ordre de 0,5 mm en amplitude.

Le document de Steven D. Hand, James F. Hand, William J. Mogon et Eric Schindelholz, publié en juillet 2005 et intitulé "Proceedings of CMSC 2005 Coodinate Systems Measurement Conference" décrit un système OptoTOP et un procédé de caractérisation de défauts associé. Le procédé repose sur une projection de lumière structurée subissant une triangulation. Ce procédé a une bonne précision, de l'ordre de 10 micromètres en amplitude, mais l'aire de la surface analysée est faible, de l'ordre de quelques décimètres carrés. En outre, ce procédé nécessite un temps de traitement important.

L'article « Ondulo : une nouvelle approche du défaut d'aspect de surface par la courbure » paru dans le numéro 317 (pp. 51 à 53) du journal Surfaces en 2002, décrit un système ONDULO et un procédé associé, basé sur la réflectométrie. Le procédé caractérise des défauts d'aspect pour des surfaces réfléchissantes. Il consiste à repérer sur la pièce un ensemble de points de mesure, puis à mesurer en chaque point la phase. Le procédé reconstitue une pente en chaque point de mesure à l'aide des décalages de phases des franges alternées noires et blanches. Toutefois, ce procédé manque de précision, ce qui le rend peu fiable. De plus, il ne comporte pas d'outils permettant la classification des défauts d'aspect.

La deuxième famille de procédés de caractérisation de défauts regroupe les procédés basés sur la rétro-réflexion d'une source lumineuse.

Le brevet US 4,920,385 décrit un système et un procédé d'inspection de surface pour détecter des défauts. Le procédé comprend une succession d'étapes. Une première étape consiste à éclairer la surface d'un faisceau de lumière selon un axe, le faisceau se réfléchissant sur la surface. Lors d'une deuxième étape, un écran de rétro-réflexion est positionné de sorte que le faisceau de lumière, réfléchi par la surface à analyser, est réfléchi par l'écran avant d'être à nouveau réfléchi par la surface, sous forme d'un cône de lumière centré sur l'axe. Une troisième étape consiste à détecter une portion du cône de lumière réfléchi à nouveau, en formant une image sur un capteur, pour déterminer un défaut sur ladite surface à l'aide de l'image formée. Toutefois, ce système optique ne comporte pas d'outil pertinent de classification des défauts d'aspect.

Le but de l'invention est donc de permettre de caractériser des défauts de faible amplitude, de l'ordre de 10 à 200 micromètres, pour des zones à analyser ayant une aire relativement importante.

A cet effet, l'invention a pour objet un procédé du type précité, **caractérisé en ce qu**'il comprend les étapes consistant à :

- définir une succession de points de mesure suivant la longueur du défaut, chaque point de mesure suivant étant défini à partir d'un point de mesure précédent en fonction d'un critère prédéterminé et enregistrer des paramètres géométriques du défaut pour chaque point de mesure,
- déduire une caractérisation du défaut de ladite pièce à partir de l'ensemble des paramètres géométriques enregistrés aux différents points de mesure.

Suivant d'autres modes de réalisation, le procédé comprend une ou plusieurs des caractéristiques suivantes, prise(s) isolément ou selon toutes les combinaisons techniquement possibles :

- le procédé comprend, après l'étape de capture de l'image, une étape de calibrage consistant à déterminer une relation de correspondance entre un pixel et sa taille correspondante réelle sur ladite pièce,
- les pixels de l'image sont exprimés en niveaux de gris et le critère prédéterminé de l'étape de définition d'une succession de points de mesure consiste à rechercher le pixel, où la variation de niveaux de gris suivant la longueur et la direction d'un profil est extrémale, ledit profil étant calculé à partir d'un segment défini sur l'image, chaque pixel du profil étant égal à la variation en niveau de gris en un pixel correspondant dudit segment selon la longueur et la direction dudit segment, et chaque point de mesure est le pixel pour lequel la variation de niveaux de gris suivant la longueur et la direction d'un profil de mesure correspondant est extrémale, ledit pixel étant calculé par un algorithme de détermination de la variation extrémale de niveaux de gris,
- chaque profil de mesure est sensiblement perpendiculaire au défaut en son point de mesure,
- le premier profil de mesure est choisi par un opérateur dans une portion de l'image, où le défaut est visible,
- l'algorithme de détermination de la variation extrémale de niveaux de gris met en oeuvre une moyenne de niveaux de gris de pixels adjacents suivant une direction sensiblement perpendiculaire au profil correspondant, la moyenne étant notamment effectuée sur un nombre M de pixels, de préférence compris entre 5 et 10,
- l'algorithme de détermination de la variation extrémale de niveaux de gris met en oeuvre un filtre de lissage, de préférence un filtre ondulatoire de lissage, afin de diminuer le bruit dans un profil moyenné, obtenu après application du filtre de la moyenne sur ledit profil et le filtre de lissage est appliqué lors de deux étapes successives :

- lors de la première étape, le profil moyenné est filtré afin d'évaluer les pixels de début et de fin du profil,
- lors de la deuxième étape, le signal issu de la première étape est à nouveau filtré en considérant les informations entre les pixels de début et de fin, de sorte que le signal filtré à l'issue de la deuxième étape est indépendant de la longueur du profil moyenné,
- l'étape de définition d'une succession de points de mesure met en oeuvre un algorithme itératif de progression le long du défaut en fonction du critère prédéterminé et comportant les phases successives suivantes :

- détermination d'un profil intermédiaire par translation du profil de mesure précédent d'un nombre N de pixels selon une direction orthogonale à la direction du profil de mesure précédent, N étant de préférence compris entre 1 et 10,
- calcul du point de mesure suivant par : définition d'un pixel intermédiaire pour lequel la variation de niveaux de gris suivant la longueur et la direction du profil intermédiaire est extrémale et repositionnement sur le défaut en un point de mesure suivant à partir du pixel intermédiaire,
- la phase de calcul du point de mesure suivant dudit algorithme de progression le long du défaut comporte les stades successifs consistant à :

- déterminer la variation extrémale de niveaux de gris suivant la longueur et la direction du profil intermédiaire et les coordonnées dudit pixel intermédiaire,
- déterminer dans une plage de +/- R degrés autour dudit pixel intermédiaire la direction dans laquelle la variation de niveaux de gris est extrémale, la direction du profil intermédiaire correspondant à l'angle 0 degré, l'angle entre la direction du profil intermédiaire et la direction, dans laquelle la variation de niveaux de gris est extrémale, étant appelé Rgrad, R étant de préférence compris entre 1 et 20,
- déterminer un profil intermédiaire suivant par rotation du profil intermédiaire précédent d'un angle Rgrad,
- réitérer les stades précédents à partir du premier stade jusqu'à ce qu'une condition d'arrêt prédéterminée soit remplie, afin de déterminer un profil de mesure suivant et un point de mesure suivant,
- la condition d'arrêt prédéterminée comprend la condition suivante :

- la variation extrémale de niveaux de gris et la direction dans laquelle la variation de niveaux de gris est extrémale sont sensiblement identiques respectivement à la variation extrémale de niveaux de gris précédente et à la direction précédente de variation extrémale de niveaux de gris,
- lorsque la condition d'arrêt prédéterminée est remplie, l'algorithme de progression le long du défaut est réitéré, à partir de l'étape de translation du profil de mesure précédent d'un nombre N de pixels, jusqu'à ce qu'une condition parmi des conditions de fin du défaut soit remplie et en ce que les conditions de fin du défaut comprennent les conditions suivantes :

- la variation extrémale de niveaux de gris est inférieure à une valeur prédéterminée, de préférence comprise entre 3 et 5 unités de variation de gris par pixel,
- l'algorithme est dans une zone de l'image, où la valeur moyenne en niveau de gris des pixels de ladite zone est supérieure à une valeur de seuil maximal, de préférence égale à 200,

- l'algorithme est dans une zone de l'image, où la valeur moyenne en niveau de gris des pixels de ladite zone est inférieure à une valeur de seuil minimal, de préférence égale à 50,
- une ligne du défaut est obtenue en reliant les points de mesure, et la caractérisation du défaut est déduite de paramètres comprenant les paramètres suivants :

- la longueur de la ligne de défaut également appelée longueur du défaut,
- la plus grande longueur de profil parmi les différents profils de mesure calculés, également appelée largeur du défaut,
- la valeur extrémale parmi les différentes variations extrémales de niveaux de gris calculées.

L'invention a également pour objet un produit de programme informatique qui, lorsqu'il est exécuté par un ordinateur, amène l'ordinateur à exécuter un procédé de caractérisation d'un défaut de surface sur une pièce, du type comprenant les étapes consistant à :

- capturer une image d'une zone à analyser de la pièce, l'image comportant une pluralité de pixels, chaque pixel étant repéré dans l'image par des coordonnées (X, Y),
- définir une succession de points de mesure suivant la longueur du défaut, chaque point de mesure suivant étant défini à partir d'un point de mesure précédent en fonction d'un critère prédéterminé et enregistrer des paramètres géométriques du défaut pour chaque point de mesure,
- déduire une caractérisation du défaut de ladite pièce à partir de l'ensemble des paramètres géométriques enregistrés aux différents points de mesure.

L'invention a également pour objet une installation du type précité, **caractérisée en ce qu**'elle comprend :

- des moyens pour définir une succession de points de mesure suivant la longueur du défaut, chaque point de mesure suivant étant défini à partir d'un point de mesure précédent en fonction d'un critère prédéterminé,
- des moyens d'enregistrement de paramètres géométriques du défaut pour chaque point de mesure,
- des moyens pour déduire une caractérisation du défaut de ladite pièce à partir de l'ensemble des paramètres géométriques enregistrés aux différents points de mesure.

L'invention et ses avantages seront mieux compris à la lecture de la description qui va suivre, donnée uniquement à titre d'exemple, faite en référence aux dessins annexés, sur lesquels :

- la figure 1 est une représentation schématique d'un système de caractérisation de défauts, mis en oeuvre par le procédé selon l'invention ;
- la figure 2 est un organigramme de fonctionnement du procédé selon l'invention ;
- la figure 3 est une image d'une zone à analyser par le procédé selon l'invention ;
- la figure 4 est une image utilisée pour la calibration du système selon l'invention ;
- la figure 5 est un organigramme de fonctionnement du procédé selon l'invention, lors de l'étape de définition d'une succession de points de mesure ; et
- la figure 6 est une représentation schématique des phases de l'étape de la figure 5.

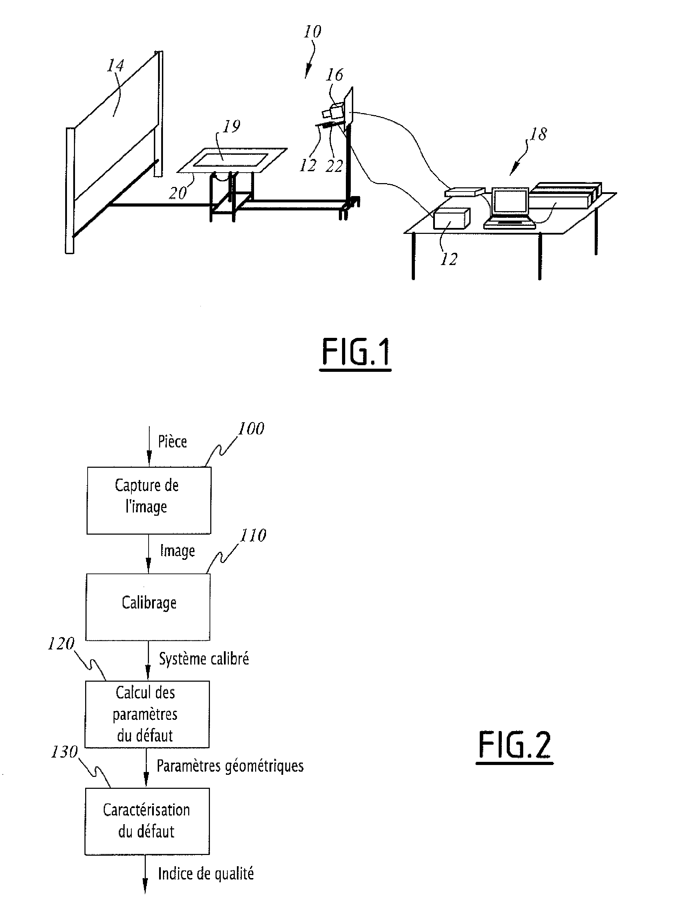

Sur la figure 1, un système 10 de caractérisation de défauts de surface sur des pièces comprend, de manière classique, une source lumineuse 12, un écran réfléchissant 14 et un dispositif 16 de capture d'images, reliée à une unité 18 de traitement d'informations. La pièce à analyser 19 est disposée sur une table 20 motorisée et pilotée par l'unité de traitement 18.

La source lumineuse 12 comporte un réglage du niveau de luminosité. La source lumineuse 12 est montée sur un support 22 muni de moyens de réglage de la position et de la direction de la source lumineuse.

L'écran réfléchissant 14 est destiné à renvoyer un faisceau lumineux, issu de la source lumineuse 12 et réfléchi par la pièce 19, à nouveau sur la pièce 19.

Le dispositif 16 de capture d'images est une caméra numérique.

L'unité 18 de traitement comporte des moyens de contrôle de la caméra 16 et de la table 20, et un dispositif de traitement d'images.

Le procédé est mis en oeuvre sous la commande d'un programme d'ordinateur contenu dans l'unité 18 de traitement d'informations.

Comme représenté sur la figure 2, le procédé de caractérisation de défauts de surface comporte quatre étapes principales 100, 110, 120 et 130, certaines étapes comprenant elles-mêmes plusieurs phases successives.

Un défaut 23 correspond à un relief abrupte et indésirable de la surface de la pièce 19. Une coupe selon un plan transversal de la pièce 19 passant par le défaut 23 se caractérise par au moins trois changements de pente. Un premier changement de pente correspond à une extrémité d'une coupe du défaut 23 selon le plan transversal, un deuxième changement de pente correspond à un point de relief maximal de ladite coupe du défaut 23 et un troisième changement de pente correspond à l'autre extrémité de ladite coupe du défaut 23. Lorsque le relief présente une ondulation, le nombre de changements de pente est supérieur à 3, le premier et le dernier changement de pente correspondant aux deux extrémités de ladite coupe du défaut 23.

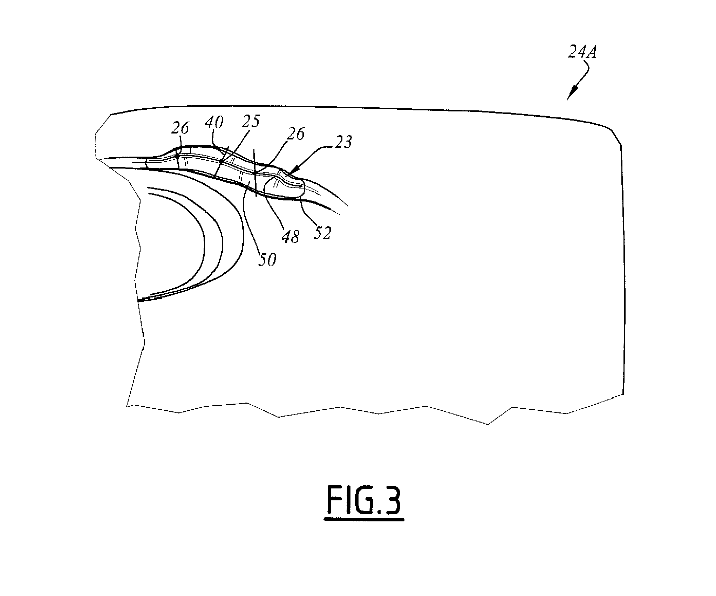

A l'étape 100, une image 24A de la zone à analyser de la pièce 19 est capturée par la caméra 16 et enregistrée par l'unité de traitement 18. L'image 24A, visible partiellement sur la figure 3, comporte une pluralité de pixels exprimés en niveaux de gris. Chaque pixel est repéré dans le plan l'image 24A par deux coordonnées, une abscisse X et une ordonnée Y, non représentées. L'unité 18 de traitement passe ensuite à l'étape 110.

Le niveau de gris représente l'intensité lumineuse d'un pixel. Dans le mode de réalisation décrit, des zones en forme de bosse, représentées par des zones claires sur l'image 24A, réfléchissent plus le faisceau de lumière de la source lumineuse 12 que des zones en forme de creux, représentées par des zones sombres sur l'image 24A.

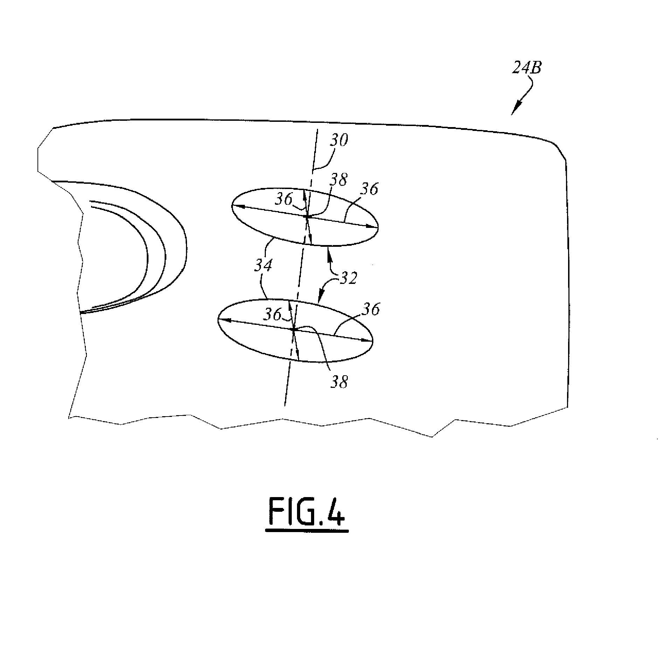

A l'étape 110, le système 10 est calibré à l'aide d'une image 24B de calibrage, visible sur la figure 4, prise avec deux gabarits en forme de cercle de diamètre réel connu et posés sur la pièce 19 au voisinage du défaut 23, dans des conditions opératoires identiques à celles de l'image 24A de la zone à analyser, concernant le positionnement de la pièce 19 et de la caméra 16. Le calibrage permet de déterminer une relation de correspondance entre un pixel et sa taille correspondante réelle sur la pièce 19. L'unité 18 passe ensuite à l'étape 120.

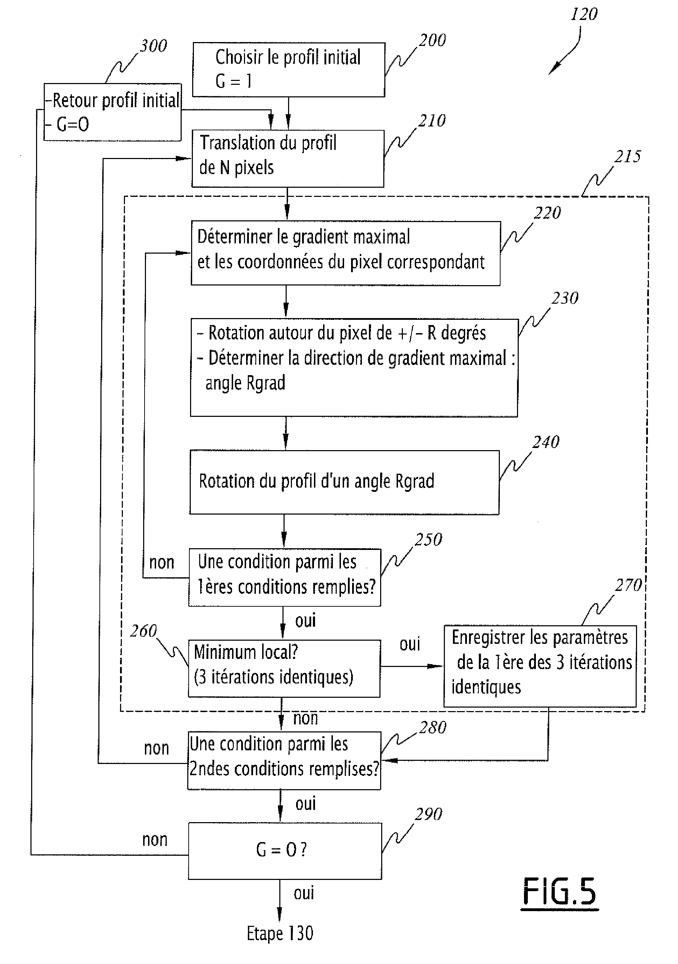

A l'étape 120, deux points de mesures positionnés de part et d'autre du défaut 23 sont sélectionnés par l'opérateur, ce qui détermine le point de mesure initial 25. Une succession de points de mesure 26 suivant la longueur d'un défaut 23, visible sur les figures 3 et 5, est définie à partir d'un point de mesure initial 25 en fonction d'un critère prédéfini. Des paramètres géométriques du défaut 23 sont ensuite enregistrés pour chaque point de mesure 25, 26. L'unité 18 de traitement passe ensuite à l'étape 130.

L'étape 120 est destinée à déterminer et à quantifier les changements de pente pour chaque coupe transversale de la pièce 19 passant par le défaut 23. Les coupes transversales sont déterminées en se déplaçant le long du défaut 23 à partir d'une première coupe transversale, choisie par un opérateur.

Une portion d'une coupe transversale de la pièce 19 correspond à un segment défini sur l'image 24A en niveau de gris. Un profil est calculé à partir de ce segment. Chaque pixel du profil d'abscisse X et d'ordonnée Y est égal à la variation en niveau de gris en le pixel d'abscisse X et d'ordonnée Y dudit segment selon la longueur et la direction dudit segment. Chaque pixel du profil correspond à la pente en un point de la portion de ladite coupe transversale de la pièce 19 passant par le défaut 23.

La variation de niveau de gris en un pixel dudit profil suivant la longueur et la direction de ce profil correspond à la variation de la pente en un point de la portion de ladite coupe transversale passant par le défaut 23. Les changements de pente recherchés dans ladite portion correspondent alors à une variation extrémale de niveau de gris en un pixel dudit profil.

Le critère prédéfini de l'étape 120 consiste à rechercher le pixel, où la variation de niveaux de gris suivant la longueur et la direction d'un profil donné est extrémale. Une succession de profils est déterminée en se déplaçant le long du défaut 23 en fonction de ce critère, à partir d'un premier profil choisi par l'opérateur.

A l'étape 130, une caractérisation du défaut 23 de la pièce est déduite à partir de l'ensemble des paramètres géométriques enregistrés aux différents points de mesure 25, 26. Un indice de qualité est attribué à la pièce 19 en fonction de la caractérisation du défaut 23.

Lors de l'étape 110 de calibrage, représentée sur la figure 4, la relation de correspondance entre un pixel et sa valeur en millimètres dépend de plusieurs paramètres. Ces paramètres sont, par exemple, une direction 30 dans laquelle la relation est calculée, la profondeur de champ de l'image 24B, et la valeur d'un coefficient de zoom utilisé pour la capture de l'image 24B.

L'étape 110 de calibrage consiste à localiser deux gabarits 32 en forme de cercle de diamètre réel connu sur la pièce 19. Les deux gabarits 32 sont déposés sur la pièce 19 au voisinage du défaut 23. Le premier des deux gabarits 32 est placé en zone avant et le second en zone arrière, recouvrant ainsi la totalité du champ de l'image. Les deux gabarits 32 doivent apparaître en totalité sur l'image 24B, afin d'appréhender le centre des deux cercles. L'unité 18 calcule automatiquement le bord 34 des cercles en utilisant des opérations morphologiques sur l'image 24B. Les opérations morphologiques sont une expansion et une érosion pour extraire les bords 34, puis un filtre Sobel pour éliminer le bruit. Le système 10 identifie ensuite pour chaque cercle 32, un diamètre 36 suivant une direction donnée et son centre 38. Les bords 34 et les centres 38 des cercles sont enregistrés par l'unité de traitement 18.

La direction 30, dans laquelle la relation de correspondance entre un pixel et sa taille réelle est calculée, est la droite reliant deux centres 38 de cercles. La relation de correspondance, ou relation de proportionnalité, est déterminée pour la distance entre les centres 38, afin de prendre en compte le paramètre de la profondeur de champ des images 24A et 24B, prises dans les mêmes conditions opératoires.

La relation de correspondance est, par exemple, exprimée sous la forme d'un rapport $\alpha$ de la distance réelle connue entre les centres 38 sur le nombre de pixels entre les centres 38, selon la direction 30. L'unité de mesure pour les distances réelles sur la pièce 19 est le millimètre. Chaque pixel d'un segment selon la direction 30 a alors une taille réelle égale à α millimètres.

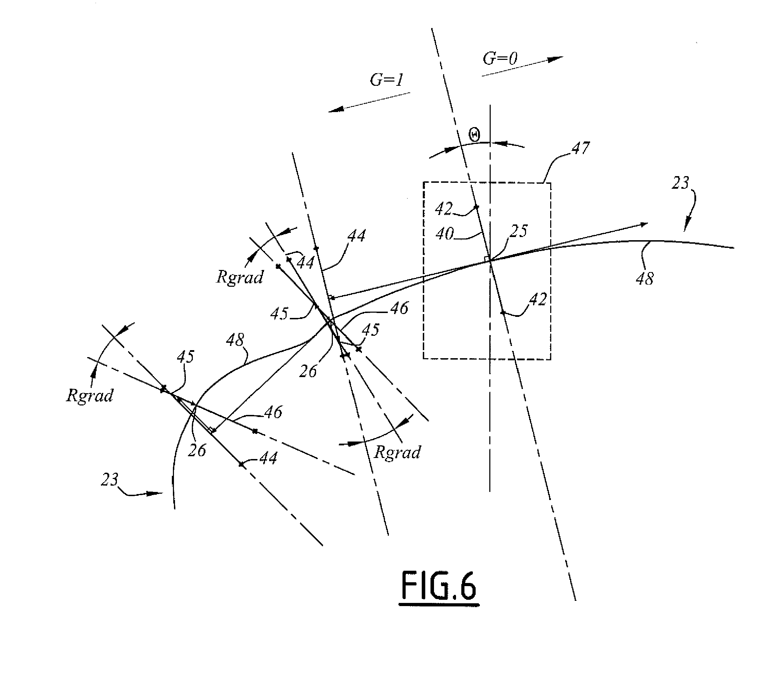

L'étape 120 de calcul des paramètres géométriques du défaut est illustrée sur la figure 5 sous la forme d'un organigramme de fonctionnement et sur la figure 6 sous la forme d'une représentation schématique. L'étape 120 met en oeuvre un algorithme itératif de progression le long du défaut et comporte plusieurs phases successives.

Lors de la phase initiale 200, l'opérateur détermine un premier profil de mesure 40 en choisissant ses deux extrémités 42 dans une portion de l'image 24A, où le défaut 23 est visible. Le premier profil 40 est déterminé autant que possible dans une direction sensiblement perpendiculaire au défaut 23.

Un algorithme de détermination de la variation extrémale de niveaux de gris est ensuite appliqué au profil de mesure initial 40, afin de calculer le point de mesure initial 25.

L'algorithme de détermination de la variation extrémale de niveaux de gris met en oeuvre successivement deux filtres et s'applique à un profil donné.

Le premier filtre est une moyenne de niveaux de gris de pixels adjacents suivant une direction sensiblement perpendiculaire au profil 40, 44, 46 sélectionné.

Lors de l'application du premier filtre, le procédé sélectionne une portion 47 de l'image 24A, contenant le profil 40, 44, 46 sélectionné. La portion 47 est en forme d'un rectangle, dont les bords sont parallèles au bord de l'image 24A. La portion 47 est représentée de manière mathématique par une matrice I, dont chaque élément est la valeur en niveaux de gris d'un pixel. Les éléments de la matrice I sont rangés en fonction de l'abscisse X et de l'ordonnée Y de chaque pixel.

L'unité 18 de traitement effectue ensuite une rotation de la portion 47 d'un angle Θ, de sorte que le profil 40, 44, 46 sélectionné est, après rotation de la portion 47, parallèle à l'axe des ordonnées de l'image 24A. La rotation d'angle Θ est effectuée en multipliant la matrice I par une matrice de rotation d'angle Θ pour obtenir une matrice Ir. La matrice Ir est la représentation mathématique de la portion 47 après rotation d'angle Θ.

Une moyenne est enfin effectuée sensiblement perpendiculairement au profil 40, 44, 46 sélectionné pour un nombre M de pixels. M est, par exemple, compris entre 5 et 10.

Le résultat obtenu est une matrice Im, dont les éléments sont calculés en fonction des éléments de la matrice Ir selon la formule suivante :

$$I_m(x,y) = \frac{1}{M}\sum_{k=1}^{M} I_r(x+k,y)$$

où Im(x,y) est l'élément de la matrice Im, exprimé en niveau de gris, correspondant au pixel d'abscisse X et d'ordonnée Y et Ir(X,Y) est l'élément de la matrice Ir, exprimé en niveau de gris, correspondant au pixel d'abscisse X et d'ordonnée Y.

Le deuxième filtre mis en oeuvre dans l'algorithme de détermination de la variation extrémale de niveaux de gris est un filtre de lissage, afin de diminuer le bruit dans le profil moyenné. Le filtre de lissage est, par exemple, un filtre ondulatoire de lissage basé sur une variante heuristique du principe de Steind. Le filtre de lissage se décompose en deux étapes successives.

Lors de la première étape, le filtre analyse tous les pixels du profil moyenné afin d'évaluer les pixels de début et de fin du profil moyenné. Lors de la deuxième étape, le signal issu de la première étape est à nouveau filtré en considérant les informations entres les pixels de début et de fin, de sorte que le signal filtré à l'issue de la deuxième étape est indépendant de la longueur du profil moyenné.

Dans la suite de la phase 200, l'unité 18 de traitement centre le profil de mesure initial 40 sur le point de mesure initial 25. Une variable G est fixée à la valeur 1, afin d'indiquer que l'unité 18 va dans un premier temps rechercher les points de mesure 26 dans la partie de l'image 24A située à gauche du profil de mesure initial 40. L'unité 18 passe ensuite à la phase 210.

Lors de la phase 210, un profil intermédiaire 44 est déterminé par translation du profil de mesure initial 40 d'un nombre N de pixels selon une direction orthogonale à la direction du profil de mesure initial 40. Si la variable G est égale à 1, alors la translation est effectuée vers la gauche. Si la variable G est égale à 0, alors la translation est effectuée vers la droite. N est de préférence compris entre 1 et 10 et par exemple égal à 5. L'unité 18 de traitement passe alors à la phase 215.

La phase 215 est une phase de calcul du point de mesure 26 suivant. La phase 215 comprend la définition d'un pixel intermédiaire 45 pour lequel la variation de niveaux de gris suivant la longueur et la direction du profil intermédiaire 44 est extrémale et le repositionnement sur le défaut 23 en un point de mesure suivant 26 à partir du pixel intermédiaire 45. La phase 215 comporte plusieurs stades successifs 220 à 270.

Au stade 220, la valeur de la variation extrémale de niveaux de gris du profil intermédiaire 44 et les coordonnées du pixel intermédiaire 45 pour lequel la variation de niveaux de gris suivant la longueur et la direction du profil intermédiaire 44 est extrémale, sont déterminés à l'aide de l'algorithme de détermination de la variation extrémale de niveaux de gris. L'unité 18 passe alors du stade 220 au stade 230.

Au stade 230, l'unité 18 de traitement effectue une rotation autour du pixel intermédiaire 45 dans une plage de +/- R degrés et détermine la direction dans laquelle la variation de niveaux de gris est extrémale au pixel intermédiaire 45. Le balayage est effectué par pas d'un degré, à partir de l'angle -R degrés. R est de préférence compris entre 1 et 20, et par exemple égal à 10. L'angle 0° correspond à la direction du profil intermédiaire 44. L'angle de rotation entre la direction du profil intermédiaire 44 et la direction, dans laquelle la variation de niveaux de gris est extrémale, est appelé Rgrad. L'unité 18 passe alors du stade 230 au stade 240.

Au stade 240, un profil intermédiaire 44 suivant est déterminé par rotation de l'angle Rgrad du profil intermédiaire 44 précédent, afin d'être orienté selon la direction de variation extrémale de niveaux de gris. L'unité 18 passe du stade 240 au stade 250.

Au stade 250, l'unité 18 de traitement teste si une condition d'arrêt prédéterminée est remplie et dans ce cas passe au stade 260. Lorsque la condition d'arrêt prédéterminée est remplie, l'algorithme a convergé vers un profil de mesure 46 suivant, correspondant au dernier profil intermédiaire 44 calculé.

Le profil de mesure 46 suivant est alors sensiblement perpendiculaire au défaut 23 en son point de mesure 26, de par les différentes rotations successives des profils intermédiaires 44, chacune étant effectuée vers une direction de variation extrémale de niveaux de gris.

Si la condition d'arrêt prédéterminée n'est pas remplie, alors l'unité 18 retourne au stade 220.

La condition d'arrêt prédéterminée comprend la condition que la variation extrémale de niveaux de gris et la direction dans laquelle la variation de niveaux de gris est extrémale sont sensiblement identiques respectivement à la variation extrémale de niveaux de gris précédente et à la direction précédente de variation extrémale de niveaux de gris.

Au stade 260, l'unité 18 de traitement teste si le nombre d'itérations sans évolution de la variation extrémale de niveaux de gris et de la direction dans laquelle la variation de niveaux de gris est extrémale est égal à Imax. Imax est par exemple égal à 3. Si cette condition est vérifiée, alors l'unité 18 passe au stade 270. Sinon, les paramètres géométriques correspondant à la dernière itération sont enregistrés et l'unité 18 passe au stade 280.

Au stade 270, les paramètres géométriques correspondant à la première des trois itérations identiques sont enregistrés et l'unité 18 passe ensuite au stade 280.

Au stade 280, l'unité 18 de traitement teste si une condition parmi les conditions de fin du défaut 23 est remplie et dans ce cas passe à une phase 290. Si aucune condition parmi les conditions de fin du défaut 23 n'est remplie, alors le procédé retourne à la phase 210, où un nouveau profil intermédiaire 44 est déterminé par translation de N pixels à partir du dernier profil de mesure 46.

Une première condition des conditions de fin du défaut 23 est que la variation extrémale de niveaux de gris du profil de mesure 46 suivant est inférieure à une valeur prédéterminée. La valeur prédéterminée est, par exemple, comprise entre 3 et 5 unités de variation de gris par pixel.

Une deuxième condition des conditions de fin du défaut 23 est que l'algorithme de progression le long du défaut est dans une zone de l'image 24A, où la valeur moyenne en niveau de gris des pixels de ladite zone est supérieure à une valeur de seuil maximal. La valeur de seuil maximal est, par exemple, égale à 200.

Une troisième condition des conditions de fin du défaut 23 est que l'algorithme est dans une zone de l'image 24A, où la valeur moyenne en niveau de gris des pixels de ladite zone est inférieure à une valeur de seuil minimal. La valeur de seuil minimal est, par exemple, égale à 50.

Lors de la phase 290, l'unité 18 de traitement vérifie si le calcul des paramètres géométriques a déjà été effectué par translations successives vers la droite à partir du profil de mesure initial 40. En d'autres termes, l'unité 18 teste si la variable G est égale à 0 et dans ce cas passe à l'étape 130 de caractérisation du défaut. Si la variable G est égale à 1, alors l'unité 18 passe à la phase 300.

Lors de la phase 300, l'algorithme de progression le long du défaut se repositionne sur le profil de mesure initial 40 au point de mesure initial 25. La variable G est fixée à 0, de sorte que les translations effectuées lors de la phase 210 seront dirigées vers la droite, et non plus vers la gauche. L'unité 18 retourne ensuite à la phase 210.

Lors de l'étape 130 de caractérisation du défaut, l'unité 18 de traitement réalise la jonction de chaque point de mesure 25, 26, pour obtenir une ligne 48 du défaut. Cette jonction est, par exemple, effectuée en partant du dernier point de mesure 26 calculé et en le reliant au point de mesure 25, 26 le plus proche géographiquement dans l'image 24A, et ainsi de suite.

Les paramètres du défaut sont calculés à partir des paramètres géométriques déterminés à l'étape 120 pour chaque point de mesure 25, 26.

Un premier paramètre du défaut 23 est la longueur développée de la ligne 48 du défaut, également appelée longueur du défaut 23.

Un deuxième paramètre du défaut 23 est la plus grande longueur de profil parmi les différents profils de mesure 40, 46 calculés. La plus grande longueur de profil 40, 46 est également appelée largeur du défaut 23.

Un troisième paramètre du défaut 23 est la valeur extrémale parmi les différentes variations extrémales de niveaux de gris calculées, également appelée changement maximal de pente du défaut 23.

Un quatrième paramètre du défaut 23 est la direction correspondant à la valeur extrémale parmi les différentes variations extrémales de niveaux de gris calculées, qui représente la direction dans laquelle le défaut 23 est le plus visible.

Un cinquième paramètre du défaut 23 est l'aire d'un secteur 50 situé à l'intérieur d'un contour 52. Le contour 52 est la courbe qui relie les extrémités des différents profils de mesure 40, 46. L'aire du secteur 50 est également appelée surface du défaut 23.

L'unité 18 de traitement déduit la caractérisation du défaut de la pièce 19 à partir des premier, deuxième et troisième paramètres du défaut 23, à savoir la longueur du défaut 23, la largeur du défaut 23 et le changement maximal de pente du défaut 23. Pour chaque paramètre de caractérisation, plusieurs valeurs qualitatives sont possibles telles que petit, moyen et grand. La relation entre la valeur qualitative et la valeur mathématique pour chaque paramètre de caractérisation est prédéterminée selon des critères de qualité. L'unité 18 détermine alors un indice de qualité globale de la pièce 19 en fonction des valeurs qualitatives de chaque paramètre de caractérisation.

A l'issue de l'étape 130, l'unité 18 enregistre et affiche l'indice de qualité de la pièce 19 pour consultation par l'opérateur.

Ainsi, le procédé de caractérisation des défauts 23 met en oeuvre des algorithmes relativement simples et nécessite un temps de calcul réduit. Il permet de caractériser des défauts 23 de faible amplitude, de l'ordre de 10 à 200 micromètres, pour des zones de la pièce 19 ayant une aire relativement importante.

## Revendications

1. Procédé de caractérisation d'un défaut (23) de surface sur une pièce (19), du type comprenant l'étape préliminaire (100) consistant à :

   - capturer une image (24A) d'une zone à analyser de la pièce (19), l'image (24A) comportant une pluralité de pixels, chaque pixel étant repéré dans l'image (24A) par des coordonnées (X, Y) ; ledit procédé **caractérisé en ce qu'**il comprend les étapes (120, 130) consistant à :
   - définir une succession de points de mesure (25, 26) suivant la longueur du défaut (23), chaque point de mesure suivant étant défini à partir d'un point de mesure précédent en fonction d'un critère prédéterminé et enregistrer des paramètres géométriques du défaut (23) pour chaque point de mesure (25,26),
   - déduire une caractérisation du défaut (23) de ladite pièce (19) à partir de l'ensemble des paramètres géométriques enregistrés aux différents points de mesure (25, 26),

   **caractérisé en ce que** les pixels de l'image (24A) sont exprimés en niveaux de gris et le critère prédéterminé de l'étape (120) de définition d'une succession de points de mesure consiste à rechercher le pixel, où la variation de niveaux de gris suivant la longueur et la direction d'un profil (40, 44, 46) est extrémale, ledit profil (40, 44, 46) étant calculé à partir d'un segment défini sur l'image (24A), chaque pixel du profil (40, 44, 46) étant égal à la variation en niveau de gris en un pixel correspondant dudit segment selon la longueur et la direction dudit segment, et **en ce que** chaque point de mesure (25, 26) est le pixel pour lequel la variation de niveaux de gris suivant la longueur et la direction d'un profil de mesure (40, 46) correspondant est extrémale, ledit pixel étant calculé par un algorithme de détermination de la variation extrémale de niveaux de gris.

2. Procédé selon la revendication 1, **caractérisé en ce qu'**il comprend, après l'étape (100) de capture de l'image (24A), une étape (110) de calibrage consistant à :

   - déterminer une relation de correspondance entre un pixel et sa taille correspondante réelle sur ladite pièce (19).

3. Procédé selon la revendication 1, **caractérisé en ce que** chaque profil de mesure (40, 46) est sensiblement perpendiculaire au défaut (23) en son point de mesure (25, 26).

4. Procédé selon l'une quelconque des revendications 1 ou 3, **caractérisé en ce que** le premier profil de mesure (40) est choisi par un opérateur dans une portion de l'image (24A), où le défaut (23) est visible.

5. Procédé selon l'une quelconque des revendications 1, 3 ou 4, **caractérisé en ce que** l'algorithme de détermination de la variation extrémale de niveaux de gris met en oeuvre une moyenne de niveaux de gris de pixels adjacents suivant une direction sensiblement perpendiculaire au profil (40, 44, 46) correspondant, la moyenne étant notamment effectuée sur un nombre M de pixels, de préférence compris entre 5 et 10.

**6.** Procédé selon la revendication 5, **caractérisé en ce que** l'algorithme de détermination de la variation extrémale de niveaux de gris met en oeuvre un filtre de lissage, de préférence un filtre ondulatoire de lissage, afin de diminuer le bruit dans un profil moyenné, obtenu après application du filtre de la moyenne sur ledit profil (40, 44, 46) et le filtre de lissage est appliqué lors de deux étapes successives :

- lors de la première étape, le profil moyenné est filtré afin d'évaluer les pixels de début et de fin du profil,
- lors de la deuxième étape, le signal issu de la première étape est à nouveau filtré en considérant les informations entre les pixels de début et de fin, de sorte que le signal filtré à l'issue de la deuxième étape est indépendant de la longueur du profil moyenné.

**7.** Procédé selon l'une quelconque des revendications précédentes, **caractérisé en ce que** l'étape (120) de définition d'une succession de points de mesure (25, 26) met en oeuvre un algorithme itératif de progression le long du défaut (23) en fonction du critère prédéterminé et comportant les phases successives (210, 215) suivantes :

- détermination d'un profil intermédiaire (44) par translation du profil de mesure précédent (40, 46) d'un nombre N de pixels selon une direction orthogonale à la direction du profil de mesure précédent (40, 46), N étant de préférence compris entre 1 et 10,
- calcul du point de mesure (26) suivant par : définition d'un pixel intermédiaire (45) pour lequel la variation de niveaux de gris suivant la longueur et la direction du profil intermédiaire (44) est extrémale et repositionnement sur le défaut (23) en un point de mesure suivant (26) à partir du pixel intermédiaire (45).

**8.** Procédé selon l'une quelconque des revendications précédentes prise avec la revendication 7, **caractérisé en ce que** la phase (215) de calcul du point de mesure (26) suivant dudit algorithme de progression le long du défaut (23) comporte les stades successifs (220, 230, 240, 250) consistant à :

- déterminer la variation extrémale de niveaux de gris suivant la longueur et la direction du profil intermédiaire (44) et les coordonnées dudit pixel intermédiaire (45),
- déterminer dans une plage de +/- R degrés autour dudit pixel intermédiaire (45) la direction dans laquelle la variation de niveaux de gris est extrémale, la direction du profil intermédiaire (44) correspondant à l'angle 0 degré, l'angle entre la direction du profil intermédiaire (44) et la direction, dans laquelle la variation de niveaux de gris est extrémale, étant appelé Rgrad, R étant de préférence compris entre 1 et 20,
- déterminer un profil intermédiaire suivant (44) par rotation du profil intermédiaire précédent (44) d'un angle Rgrad,
- réitérer les stades précédents (220, 230, 240) à partir du premier stade (220) jusqu'à ce qu'une condition d'arrêt prédéterminée soit remplie, afin de déterminer un profil de mesure suivant (46) et un point de mesure suivant (26).

**9.** Procédé selon la revendication 8, **caractérisé en ce que** la condition d'arrêt prédéterminée comprend la condition suivante :

- la variation extrémale de niveaux de gris et la direction dans laquelle la variation de niveaux de gris est extrémale sont sensiblement identiques respectivement à la variation extrémale de niveaux de gris précédente et à la direction précédente de variation extrémale de niveaux de gris.

**10.** Procédé selon la revendication 8 ou 9, **caractérisé en ce que** lorsque la condition d'arrêt prédéterminée est remplie, l'algorithme de progression le long du défaut (23) est réitéré, à partir de l'étape (210) de translation du profil de mesure précédent (40, 46) d'un nombre N de pixels, jusqu'à ce qu'une condition parmi des conditions de fin du défaut (23) soit remplie et **en ce que** les conditions de fin du défaut (23) comprennent les conditions suivantes :

- la variation extrémale de niveaux de gris est inférieure à une valeur prédéterminée, de préférence comprise entre 3 et 5 unités de variation de gris par pixel,
- l'algorithme est dans une zone de l'image (24A), où la valeur moyenne en niveau de gris des pixels de ladite zone est supérieure à une valeur de seuil maximal, de préférence égale à 200,
- l'algorithme est dans une zone de l'image (24A), où la valeur moyenne en niveau de gris des pixels de ladite zone est inférieure à une valeur de seuil minimal, de préférence égale à 50.

**11.** Procédé selon l'une quelconque des revendications précédentes prise avec la revendication 7, **caractérisé en ce qu'**une ligne (48) du défaut (23) est obtenue en reliant les points de mesure (25, 26) et **en ce que** la caractérisation du défaut (23) est déduite de paramètres comprenant les paramètres suivants :

- la longueur de la ligne (48) de défaut également appelée longueur du défaut (23),
- la plus grande longueur de profil parmi les différents profils de mesure calculés (40, 46), également appelée largeur du défaut (23),
- la valeur extrémale parmi les différentes variations extrémales de niveaux de gris calculées.

**12.** Produit de programme informatique qui, lorsqu'il est exécuté par un ordinateur, amène l'ordinateur à exécuter un procédé de caractérisation d'un défaut (23) de surface sur une pièce (19), du type comprenant les étapes (100, 120, 130) consistant à :

- capturer une image (24A) d'une zone à analyser de la pièce (19), l'image (24A) comportant une pluralité de pixels, chaque pixel étant repéré dans l'image (24A) par des coordonnées (X, Y),
- définir une succession de points de mesure (25, 26) suivant la longueur du défaut (23), chaque point de mesure suivant étant défini à partir d'un point de mesure précédent en fonction d'un critère prédéterminé et enregistrer des paramètres géométriques du défaut (23) pour chaque point de mesure (25,26),
- déduire une caractérisation du défaut (23) de ladite pièce (19) à partir de l'ensemble des paramètres géométriques enregistrés aux différents points de mesure (25, 26).

**13.** Installation de caractérisation d'un défaut (23) de surface sur une pièce (19), du type comprenant des moyens de capture (16) d'une image (24A) d'une zone à analyser de la pièce (19), l'image (24A) comportant une pluralité de pixels, chaque pixel étant repéré dans l'image (24A) par des coordonnées (X, Y), ladite installation étant **caractérisée en ce qu'**elle comprend :

- des moyens (18) pour définir une succession de points de mesure (25, 26) suivant la longueur du défaut (23), chaque point de mesure suivant étant défini à partir d'un point de mesure précédent en fonction d'un critère prédéterminé,
- des moyens d'enregistrement (18) de paramètres géométriques du défaut (23) pour chaque point de mesure (25,26),
- des moyens (18) pour déduire une caractérisation du défaut (23) de ladite pièce (19) à partir de l'ensemble des paramètres géométriques enregistrés aux différents points de mesure (25, 26).

**FIG.1**

**FIG.2**

FIG.3

FIG.4

EP 2 109 079 A1

FIG.5

## FIG.6

EP 2 109 079 A1

Europäisches
Patentamt

European
Patent Office

Office européen
des brevets

## RAPPORT DE RECHERCHE EUROPEENNE

Numéro de la demande

EP 09 15 5411

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 038 335 A (YOKOYAMA HARUHIKO [JP] ET AL) 14 mars 2000 (2000-03-14) * abrégé * * colonne 7, ligne 36 - colonne 8, ligne 31 * * figures 11A,12 * ----- | 12,13 | INV. G06T5/00 |
| A | WO 93/12615 A (US GOVERNMENT [US]) 24 juin 1993 (1993-06-24) * abrégé * ----- | 1-13 | |
| A | FRIEDRICH M. WAHL: "Digitale Bildsignalverarbeitung : chapitre: 5.2.4 : Konturverfolgung" SPRINGER, BERLIN, 1984, XP002511749 * le document en entier * ----- | 1-13 | |
| A | ZAMPERONI P: "Contour tracing of grey-scale images based on 2-D histograms" PATTERN RECOGNITION UK, vol. 15, no. 3, 1982, pages 161-165, XP002511750 ISSN: 0031-3203 * abrégé * ----- | 1-13 | **DOMAINES TECHNIQUES RECHERCHES (IPC)** G06T |

Le présent rapport a été établi pour toutes les revendications

| Lieu de la recherche | Date d'achèvement de la recherche | Examinateur |
|---|---|---|
| Berlin | 7 avril 2009 | Gao, Miao |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 5411

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2009

| Document brevet cité au rapport de recherche | Date de publication | Membre(s) de la famille de brevet(s) | Date de publication |
|---|---|---|---|
| US 6038335 A | 14-03-2000 | AUCUN | |
| WO 9312615 A | 24-06-1993 | AUCUN | |

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 4920385 A

**Littérature non-brevet citée dans la description**

- **Zhao Yu-Ming ; Zhang Guo-Zhong ; Yu Zhe-Feng.** Point cloud fitting of NURBS curved surface in reverse design of automobiles. *Natural Sense,* Juillet 2005, vol. 26 (7), 680-2

- **Steven D. Hand ; James F. Hand ; William J. Mogon ; Eric Schindelholz.** *Proceedings of CMSC 2005 Coodinate Systems Measurement Conference,* Juillet 2005
- Ondulo : une nouvelle approche du défaut d'aspect de surface par la courbure. *Surfaces,* 2002, 51-53